# EUROPÄISCHE PATENTANMELDUNG

(11) **EP 1 193 579 A2**
(43) Veröffentlichungstag der Anmeldung: **03.04.2002**
(21) Anmeldenummer: 01120845.1
(22) Anmeldetag: 30.08.2001
(51) Int. Cl.: G05B 19/042, H02H 7/085

(54) **Steuersystem und Verfahren zur Steuerung einer Schliesseinrichtung**

(30) Priorität: 07.09.2000 DE 10044312
(71) Anmelder: Wampfler Aktiengesellschaft, 79576 Weil am Rhein-Maerkt (DE)
(72) Erfinder: Seidel, Dieter, 79585 Steinen (DE); Bormann, Uwe, 79595 Rümmingen (DE)
(74) Vertreter: Rapp, Bertram, Dr.

(57) **Zusammenfassung**

Die Erfindung betrifft eine Steuerschaltung zur Steuerung einer von einem Motor (1) angetriebenen Schließeinrichtung, welche eine Vorrichtung (2) zur Erfassung mindestens einer Meßgröße (x) aufweist, die dem Antriebsmoment des Motors (1) entspricht und ein Steuersignal (S) erzeugt, sobald die erfaßte Meßgröße (x) einen vorgegebenen Grenzwert über- oder unterschreitet. Bekannte Schließeinrichtungen weisen eine ungleichmäßige Empfindlichkeit der Sicherungsabschaltung auf. Die Aufgabe der vorliegenden Erfindung, eine Steuerschaltung zur Steuerung einer Schließeinrichtung bereitzustellen, welche über die gesamte Bewegungsstrecke eine gleichbleibende Empfindlichkeit der Sicherungsabschaltung aufweist, wird dadurch gelöst, daß ein Positionsgeber (3) zur Erfassung der Position (p) der Schließeinrichtung und ein Datenspeicher (4) vorgesehen ist, wobei der Datenspeicher (4) zur Speicherung von Referenzdaten dient, welche den Verlauf der oder jeder Meßgröße (x) in Abhängigkeit der Position (p) repräsentieren und die Steuerschaltung einen Komparator (5) aufweist, der bei festgelegten Positionen (p) den dieser Position (p) zugeordneten Referenzwert (x_{R}) der Meßgröße mit dem an dieser Position (p) erfaßten Wert der Meßgröße (x) vergleicht und ein Steuersignal (S) erzeugt, wenn bei diesem Vergleich eine vorgegebene Abweichung überschritten ist.

## Beschreibung

Die Erfindung betrifft ein Steuersystem nach dem Oberbegriff von Anspruch 1 sowie ein Verfahren zur Steuerung einer Schließeinrichtung gemäß Anspruch 13.

Für die Absicherung von Quetsch- und Scherstellen an kraftbetätigten beweglichen Einrichtungen, wie z. B. an automatischen Schließeinrichtungen und Maschinen, verwendet man berührungsbehaftete Schutzsysteme, die bei Druckbeaufschlagung die gefahrbringende Bewegung abschalten und so Personen und Sachgüter vor Verletzungen und Beschädigungen schützen. Beispielsweise sind aus der DE 196 06 745 A1 und der DE 196 47 720 A1 Sicherheitsleisten zur Anordnung an Schließkanten bewegbarer Einrichtungen bekannt. Diese Schließkantensicherungen weisen einen elastischen Schlauch auf, in dem elektrische Kontaktelemente angeordnet sind, die bei Einwirken einer äußeren Kraft auf den Schlauch betätigt werden, in dem der durch die elektrischen Kontaktelemente gebildete Strompfad unterbrochen wird. Durch diesen Kontaktunterbruch wird der Antrieb der kraftbetätigten Einrichtung abgeschaltet.

Solche Schließkantensicherungen sind in der Regel in ihrer Bauausführung recht aufwendig und benötigen großvolumigen Einbauraum. Darüber hinaus sind diese Schließkantensicherungen empfindlich gegen langanhaltende Verformungen der Elastomerteile, weil diese zu einer Veränderung der Sicherheitscharakteristik führen..

Als Alternative werden daher häufig bei motorgetriebenen Schließeinrichtungen Steuerungen verwendet, welche durch eine Notabschaltung den Antrieb still setzen, sobald ein Gegenstand die Bewegung der Schließeinrichtung behindert. Bei bekannten Steuerschaltungen wird beispielsweise der Motorstrom gemessen und bei Überschreitung eines Grenzwertes abgeschaltet oder ein Reversiervorgang ausgelöst (Überlastsicherung). Derartige Steuerungen für Schließvorrichtungen sind beispielsweise in dem deutschen Gebrauchsmuster 91 00 504 U1 und der Offenlegungsschrift DE 195 26 559 A1 beschrieben.

Der Nachteil dieser in seiner Bauausführung relativ einfachen Sicherung ist, daß der statische Grenzwert der Überlastsicherung oftmals relativ hoch eingestellt werden muß, damit der Bewegungsablauf im störungsfreien Normalbetrieb der Schließeinrichtung nicht gestoppt wird. Häufig liegt jedoch kein einheitlicher Bewegungsablauf vor, weil während des Schließvorgangs der mechanische Widerstand, gegen den die Schließeinrichtung anläuft, nicht konstant ist. Dies kann beispielsweise durch hemmungsbehaftete Stellen bedingt sein. Um ein sicheres Abschalten des Antriebs in Gefahrsituationen auch an solchen hemmungsbehafteten Stellen zu gewährleisten, muß der statische Grenzwert entsprechend hoch eingestellt werden, woraus sich eine unzureichende Empfindlichkeit im restlichen Bewegungsablauf ergibt. Verändert sich die Mechanik der Schließeinrichtung beispielsweise durch Verringerung der Reibung nach dem Einlauf derart, daß sich der mechanische Widerstand verringert, so steigt die Ungenauigkeit mit zunehmender Differenz zwischen dem eingestellten Grenzwert und dem Momentanwert beim störungsfreien Normalbetrieb.

Aus der Offenlegungsschrift DE 199 08 658 A1 ist ein Steuersystem für eine Schließvorrichtung bekannt, welche die genannten Nachteile beheben kann, indem ein Speicher zum Abspeichern von Kraftwerten jeweils entsprechend einer Position der Schließeinrichtung vorgesehen ist und die darin abgespeicherten Kraftwerte als Funktion der Position des Schließkörpers fortlaufend aktualisiert werden durch Bildung von gleitenden Mittelwerten. Auf diese Weise können Abnutzungserscheinungen, Verunreinigungen etc. der Schließeinrichtung bei der Bestimmung des Abschalt-Grenzwertes berücksichtigt werden. Unberücksichtigt bleiben hierbei jedoch Änderungen der Schließcharakteristik, welche sich aus Umwelteinflüssen ergeben.

Aufgabe der vorliegenden Erfindung ist es, ein Steuersystem und ein Verfahren zur Steuerung einer Schließeinrichtung zur Verfügung zu stellen, welche jederzeit eine gleichbleibende Empfindlichkeit der Sicherungsabschaltung über die gesamte Bewegungsstrecke der Schließeinrichtung ermöglichen.

Gelöst wird diese Aufgabe mit einem Steuersystem mit den kennzeichnenden Merkmalen von Anspruch 1 bzw. mit dem Verfahren gemäß Anspruch 13. Vorteilhafte Ausführungsbeispiele des Steuersystems und des Verfahrens sind den jeweiligen Unteransprüchen zu entnehmen.

Im folgenden werden Ausführungsbeispiele der Erfindung unter Bezugnahme auf die begleitenden Zeichnungen näher erläutert, welche zeigen:
- **Figur 1**: schematische Darstellung eines Steuersystems zur Steuerung einer Schließeinrichtung;
- **Figur 2**: schematische Darstellung eines typischen Verlaufs einer Referenzkurve, welche zur Steuerung der Schließeinrichtung mittels eines Steuersystems von Figur 1 verwendet wird.

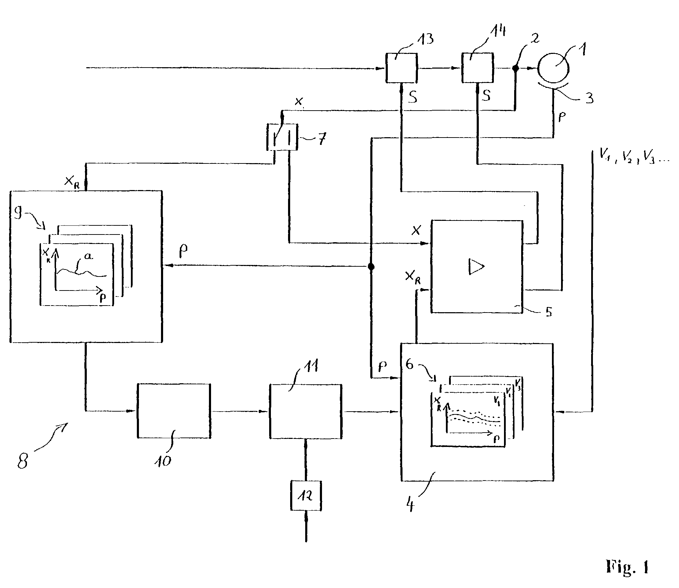

Figur 1 zeigt eine schematische Darstellung eines Steuersystems zur Steuerung einer von einem Motor 1 angetriebenen Schließeinrichtung. Die Schließeinrichtung selbst ist hierbei in der schematischen Darstellung von Figur 1 nicht dargestellt. Bei der Schließeinrichtung kann es sich beispielsweise um ein Rolltor, einen Rolladen, eine Fahrzeugschiebetür oder um ein bewegliches Maschinenteil oder dergleichen handeln. Die Schließeinrichtung ist dabei den spezifischen Anforderungen in bekannter Weise angepaßt. Hierzu sind beispielsweise der redundante und der diversitäre Aufbau bekannt.

Bei dem Motor 1 kann es sich beispielsweise um einen Elektromotor handeln, der von einer Batterie oder einer stationären Stromversorgung mit elektrischer Energie versorgt wird. Die Drehzahl des Motors und dementsprechend die von ihm geleistete Arbeit wird von einem erfindungsgemäßen Steuerssystem gesteuert.

Das Steuersystem umfaßt eine Vorrichtung 2 zur Erfassung einer Meßgröße x, welche dem Antriebsmoment des Motors 1 entspricht. Falls ein Elektromotor zum Einsatz kommt, handelt es sich bei der Meßgröße x zweckmäßiger Weise um den Arbeitsstrom des Motors 1. Dieser ist dem vom Motor 1 erzeugten Antriebsmoment bzw. der vom Motor geleisteten Arbeit proportional. Die Erfassung des Motorstromes erfolgt dann in bekannter Weise mit einem Meßwandler/Sensor.

Das Steuersystem umfaßt ferner einen Positionsgeber 3 zur Erfassung der Position p der Schließeinrichtung. Hierzu ist der Positionsgeber 3 bevorzugt an den Motor 1 gekoppelt, wobei der Motor 2 dem Positionsgeber 3 Signale übermittelt, aus denen sich eine relative Position p der Schließeinrichtung bezüglich eines gewählten Referenzpunktes ergibt. Die Erfassung der Position p durch den Positionsgeber kann jedoch auch durch andere hierfür bekannte Vorrichtungen erfolgen, beispielsweise durch Potentiometer oder Lichtschranken, welche auch die absolute Position der Schließeinrichtung erfassen können. Die Erfassung der Position p kann auch in bekannter Weise über eine Laufzeitmessung erfolgen.

Die von dem Meßgerät 2 erfaßte Meßgröße x wird an einen Auswahlschalter 7 gegeben. Der Auswahlschalter 7 weist zwei Stellungen I und II auf. In Stellung I wird das Signal der Meßgröße x an einen Mikroprozessor 8 weitergegeben. In Stellung II wird das Signal der Meßgröße x an einen Komparator 5 weitergegeben.

Die vom Positionsgeber 3 erfaßten Wert der momentanen Position p der Schließeinrichtung werden ebenfalls an den Mikroprozessor 8 weitergegeben.

Die Erfassung der Meßgröße x und der Positionen p der Schließeinrichtung erfolgt zunächst bei störungsfreiem Normalbetrieb der Schließeinrichtung und zwar über den gesamten Bewegungsablauf der Schließeinrichtung von einer unteren Endposition bis zu einer oberen Endposition. Hierbei wird der Umschalter 7 in die Stellung I gelegt, in der die erfaßten Werte der Meßgröße x an den Mikroprozessor 8 weitergeleitet werden. Der Mikroprozessor 8 verarbeitet die zugeführten Meßgrößen x und die Positionswerte p, in der Weise, daß die erfaßten Größen x und p als Wertepaare (p, x) geordnet werden. Die über den gesamten Bewegungsablauf erfaßten Wertepaare (p, x) werden im temporären Speicher 9 als Tabelle oder in Form von Referenzkurven abgespeichert. Der temporäre Speicher 9 enthält also Referenzdaten, welche den Verlauf der Meßgröße x in Abhängigkeit der Position p repräsentieren. Die Referenzwerte der Meßgröße x werden im folgenden als x_{R} bezeichnet.

Die Erfassung der Wertepaare (p, x_{R}) erfolgt mehrmals hintereinander im störungsfreien Normalbetrieb der Schließeinrichtung. Der Mikroprozessor 8 umfaßt eine Funktion zur Mittelwertbildung, welche dazu dient, die bei den unterschiedlichen Durchläufen ermittelten Wertepaare (p, x_{R}) als geometrisches Mittel zu mitteln. Die Mittelwertbildung ist in dem schematischen Diagramm von Figur 1 mit Bezugszahl 10 bezeichnet.

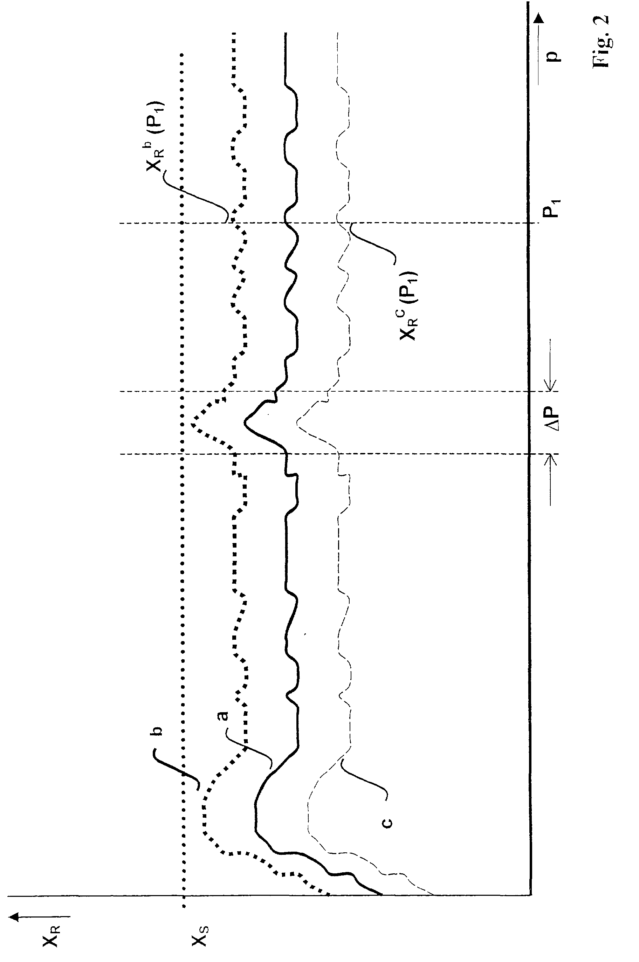

Aus den gemittelten Referenzkurven x_{R}(p) werden anschließend vom Mikroprozessor 8 Toleranzkurven ermittelt. Diese Toleranzkurven ergeben sich aus der gemittelten Referenzkurve a und umfassen eine obere Toleranzkurve b und eine untere Toleranzkurve c. Figur 2 zeigt einen typischen Verlauf einer gemittelten Referenzkurve x_{R}(p) (a) und dazugehöriger Toleranzkurven b und c. Die Referenzkurve a von Figur 2 spiegelt im Bereich Δp eine hemmungsbehaftete Stelle wieder, bei welcher der durch die Schließeinrichtung zu überwindende mechanische Widerstand erhöht ist. Im Bereich Δp ist der Wert des Referenzwertes x_{R} erhöht, wodurch das erhöhte Antriebsmoment des Motors in diesem Bereich wiedergegeben wird. Im Anfahrbereich (p → 0) ist aus Figur 2 ebenfalls ein erhöhtes Antriebsmoment des Motors zu erkennen.

Die obere Toleranzkurve b liegt dabei einheitlich über den gesamten Bereich der Bewegung um einen vorgegebenen Prozentsatz, beispielsweise 10%, vorzugsweise 5 %, oberhalb der Referenzkurve a. Entsprechend liegt die untere Toleranzkurve c um einen vorgegebenen Prozentsatz, beispielsweise ebenfalls 10%, vorzugsweise 5 %, unterhalb der Referenzkurve a. Die Referenzwerte der oberen bzw. der unteren Toleranzkurve (x_{R}^{b} bzw. x_{R}^{c}) ergeben sich also beispielsweise (siehe Figur 2) bei einer bestimmten Position p₁ aus: x_{R}^{b} (p₁)= x_{R}(p₁) · (1+0,3) bzw. x_{R}^{c} (p₁)= x_{R}(p₁) · (1-0,3).

Die Funktionseinheit des Mikroprozessors 8 zur Ermittlung der Toleranzkurven b und c ist in Figur 1 mit der Bezugszahl 11 bezeichnet. Der Wert, um den die obere Toleranzkurve b und die untere Toleranzkurve c von der Referenzkurve a auf der Achse der Meßgröße x entfernt liegt, kann dabei vom Benutzer durch eine Eingabefunktion 12 in den Mikrocomputer 8 eingegeben werden.

Der Mikrocomputer 8 umfaßt ferner einen Speicher 4, in welchem die so ermittelten Referenzkurven a mit den Toleranzkurven b und c in Form von angepaßten Ausgleichskurven 6 abgespeichert und gegebenenfalls über eine Schnittstelle für die graphische Darstellung oder externe Diagnose zur Verfügung stehen.

Die oben beschriebene Ermittlung und Abspeicherung der Referenzdaten, welche den Verlauf der Meßgröße x in Abhängigkeit der Position p der Schließeinrichtung wiedergeben, erfolgt dabei bei unterschiedlichen Umgebungsparametern, wie beispielsweise der Umgebungstemperatur, des Luftdrucks, der Luftfeuchtigkeit, der Windstärke und -richtung und der Lichtverhältnisse usw. Die entsprechenden Umgebungsparameter werden dabei durch geeignete Sensoren, wie beispielsweise Thermometer, Barometer, Hygrometer, Windmesser und lichtempfindlicher Detektoren erfaßt. Durch Aufnahme und Abspeicherung der Referenzdaten x_{R}(p) bei unterschiedlichen Werten dieser Umgebungsparameter v₁, v₂, v₃ ... ermöglicht dabei die Ermittlung von Korrekturgrößen für den jeweiligen Umgebungsparameter. Somit können die Referenzdaten auf die jeweiligen Werte der Umgebungsparameter angepaßt werden, indem entweder einzelne Referenzkurven für jeden unterschiedlichen Wert der oder des Umgebungsparameters abgespeichert werden oder indem entsprechende Korrekturfaktoren im Speicher 4 abgelegt und bei Bedarf aufgerufen werden.

Beim Betrieb der Schließeinrichtung wird jeweils die Meßgröße x und die Position p der Schließeinrichtung erfaßt und der Umschalter 7 in die Stellung II gelegt, in welcher der erfaßte Wert der Meßgröße x dem Komparator 5 zugeführt wird. Dem Komparator 5 wird neben der momentan erfaßten Meßgröße x ein Referenzwert x_{R} der Meßgröße zugeführt, welcher sich aus einer der in dem Speicher 4 abgespeicherten Ausgleichskurven 6 ergibt.

Der Referenzwert x_{R}, der dem Komparator 5 zugeführt wird, ergibt sich dabei aus der Ausgleichskurve 6, indem der Referenzwert x_{R} ausgewählt wird, welcher der momentan erfaßten Position p der Schließeinrichtung zugeordnet ist. Hierzu wird der momentan erfaßte Positionswert p dem Mikroprozessor 8 zugeführt, woraufhin dieser der Referenzkurve a den dieser Position p zugeordneten Referenzwert x_{R} entnimmt und dem Komparator 5 zuführt. Der Komparator 5 bildet anschließend die Differenz zwischen dem momentan erfaßten Meßwert x und dem Referenzwert x_{R.} Liegt diese Differenz über einem vorgegebenen Schwellwert, z.B. ± 10 % von x, wird vom Komparator 5 ein Steuersignal S erzeugt.

Dem Komparator 5 kann auch unmittelbar der Referenzwert x_{R}^{b} bzw. x_{R}^{c} der oberen bzw. der unteren Toleranzkurve (b bzw. c, siehe Figur 2) übermittelt werden, welche der momentan erfaßten Position p zugeordnet ist. Der Komparator 5 vergleicht die ihm zugeführten momentan erfaßten Meßwerte x mit den der momentanen Position p zugehörigen Referenzwerten x_{R}^{b} bzw. x_{R}^{c} und erzeugt ein Steuersignal S, wenn x kleiner als x_{R}^{c} oder wenn x größer als x_{R}^{b} ist.

Das Steuersignal S kann entweder auf ein Stellglied 13 oder eine Abschalteinheit 14 weitergegeben werden. Wenn das Steuersignal S auf die Abschalteinheit 14 weitergegeben wird, bewirkt die Abschalteinheit 14, daß die Energiezufuhr zum Motor 1 abgestellt wird, woraufhin die Bewegung der Schließeinrichtung stillgesetzt wird. Wird das Steuersignal S an das Stellglied 10 weitergeleitet, bewirkt das Stellglied 10, daß die Motordrehzahl erhöht bzw. verringert wird, je nachdem, ob die momentan erfaßte Meßgröße x oberhalb oder unterhalb des Toleranzbereiches liegt, welcher durch die obere Toleranzkurve b und die untere Toleranzkurve c aufgespannt wird.

Gleichzeitig mit der Erfassung der Meßgröße x und der Position p erfolgt beim Betrieb der Schließeinrichtung die Erfassung der Umgebungsparameter, wie beispielsweise Temperatur, Luftdruck, Luftfeuchtigkeit, Windstärke und -richtung, Lichtverhältnisse, mit geeigneten Sensoren. Die erfaßten Werte der momentanen Umgebungsparameter werden dem Mikroprozessor 8 zugeführt, woraufhin dieser die den erfaßten Umgebungsparametern zugeordnete Ausgleichskurve 6 auswählt und die entsprechenden Referenzwerte (x_{R} bzw. x_{R}^{b} und x_{R}^{c}) dieser Ausgleichskurve 6 dem Komparator 5 übermittelt.

In einem zweckmäßigen Ausführungsbeispiel weist der Mikroprozessor 8 eine Schnittstelle auf, mit der die im Speicher 4 abgespeicherten Referenzdaten ausgelesen werden können. In einem vorteilhaften Ausführungsbeispiel kann ferner eine Anzeige zur Verfügung gestellt werden, auf der die Referenzkurven graphisch darstellbar sind. Ferner weist das Steuersystem bevorzugt eine Eingabeeinheit auf, durch welche der Benutzer Zugriff auf verschiedene Menüfunktionen des Steuersystems hat. Auf diese Weise kann der Benutzer bestimmen, ob neue Referenzdaten aufzunehmen und abzuspeichern sind. Damit ist sichergestellt, daß die abgespeicherten Referenzdaten zu jeder Zeit aktualisiert werden können.

Die Erfassung der Position p der Schließeinrichtung kann in einem vorteilhaften Ausführungsbeispiel statt durch den Positionsgeber 3 auch indirekt über die Zeit erfaßt werden. Bei den meisten bekannten Schließeinrichtungen ist die Schließzeit hinreichend genau bestimmt, so daß die Position relativ über die Zeit ermittelt werden kann. Hierzu sind ein oder mehrere Refernzpositionssignale ausreichend, welche beispielsweise durch Endschalter überliefert werden können. Diese Ausführungsvariante weist den Vorteil auf, daß auf den Posititonsgeber 3 verzichtet werden kann.

Das erfindungsgemäße Steuersystem weist den Vorteil auf, daß die Grenzwerte, welche die Abschaltfunktion festlegen, der bestimmten Schließeinrichtung genau anpaßbar sind und über den gesamten Bereich der Schließbewegung dynamisch ausgestaltet sind. Auf diese Weise werden bei der Abschaltfunktion systemimmanente Eigenschaften der Schließeinrichtung, wie beispielsweise hemmungsbehaftete Stellen, berücksichtigt. Dabei können nachträglich auftretende Störungen im Bewegungsablauf, beispielsweise durch Verformungen der Führungsschiene der Schließeinrichtung oder dergleichen, jederzeit berücksichtigt werden, indem neue Referenzdaten aufgenommen und abgespeichert werden. Ferner können Umgebungsparameter berücksichtigt werden, indem diese sowohl bei der Aufnahme der Referenzdaten als auch beim Normalbetrieb der Schließeinrichtung erfaßt und bei der Steuersignalerzeugung berücksichtigt werden. Auf diese Weise wird über den gesamten Bereich der Bewegung der Schließeinrichtung und bei wechselnden äußeren Einflüssen eine gleichbleibende Empfindlichkeit der Notabschaltung gewährleistet.

Dabei wird der Vorteil genutzt, daß durch ein Erkennen von reproduzierbaren Kraftspitzen, wie sie z. b. durch erhöhte Reibung an einer bestimmten Position auftreten können, erkannt werden und nur an dieser Stelle ein erhöhtes Antriebsmoment des Motors zugelassen wird. An den übrigen Positionen erfolgt die Abschaltung des Systems somit bereits bei niedrigeren Kräften, welche durch ein Hindernis entstehen können. Durch diese dynamische Grenzwertüberwachung können höhere Genauigkeiten erreicht werden als bei statischem Grenzwert. Bei der statischen Grenzwertüberwachung muß nämlich der Grenzwert xₛ immer oberhalb des maximalen Wertes der Meßgröße x liegen, welche über dem gesamten Bewegungsbereich der Schließeinrichtung auftritt (vgl. Figur 2). Liegt der statische Grenzwert xₛ unterhalb dieses Maximalwertes, erfolgt eine Fehlabschaltung der Schließeinrichtung, auch ohne daß ein Hindernis die Bewegung behindert. Die bekannten Verfahren mit statischem Grenzwert unterscheiden im Gegensatz zur erfindungsgemäßen Lösung nicht, ob die Motorkraft für die Überwindung eines konstruktiv bedingten Hemmungspunktes oder für die Überwindung eines zu erkennenden Hindernisses aufgebracht wird.

## Patentansprüche

1. Steuersystem zur Steuerung einer von einem Motor (1) angetriebenen Schließeinrichtung, welches umfaßt
- eine Vorrichtung (2) zur Erfassung mindestens einer Meßgröße (x), die einer auf die Schließeinrichtung wirkenden Kraft entspricht,
- eine Vorrichtung (3) zur Erfassung der Position (p) der Schließeinrichtung,
- einen Datenspeicher (4), welcher zur Speicherung von Referenzdaten dient, die den Verlauf der oder jeder Meßgröße (x) in Abhängigkeit der Position (p) repräsentieren
- einen Komparator (5), der beim Betrieb der Schließeinrichtung bei festgelegten Positionen (p) den dieser Position (p) zugeordneten Referenzwert (x_{R}) der Meßgröße mit dem an dieser Position (p) momentan erfaßten Wert der Meßgröße (x) vergleicht und ein Steuersignal (S) erzeugt, wenn bei diesem Vergleich eine vorgegebene Abweichung überschritten ist,
**dadurch gekennzeichnet,**
- **daß** Sensoren zur Erfassung von Umgebungsparametern (v₁, v₂, v₃, ...) vorgesehen sind,
**daß** die Referenzdaten bei störungsfreiem Normalbetrieb der Schließeinrichtung und bei unterschiedlichen Umgebungsparametern (v₁, v₂, v₃, ...) aufgenommen und unter Zuordnung zu den entsprechenden Werten der Parameter (v₁, v₂, v₃, ...) als Referenzdatensätze oder Referenzkurven (6v₁, 6v₂, 6v₃, ...) im Datenspeicher (4) abgespeichert sind,
- und **daß** beim Soll-Ist-Vergleich auf den Referenzdatensatz oder die Referenzkurve (6v₁, 6v₂, 6v₃, ...) zugegriffen wird, welche den beim Betrieb der Schließeinrichtung erfaßten Momentanwerten der Umgebungsparameter zugeordnet ist.

2. Steuerschaltung nach Anspruch 1, **dadurch gekennzeichnet, daß** die Meßgröße (x) proportional zu der auf die Schließeinrichtung entgegen der Laufrichtung wirkende Kraft ist.

3. Steuerschaltung nach Anspruch 1 oder 2, **dadurch gekennzeichnet, daß** die Meßgröße (x) dem Antriebsmoment des Motors (1) entspricht.

4. Steuerschaltung nach Anspruch 3, **dadurch gekennzeichnet, daß** der Motor (1) ein Elektromotor ist, der im Vorwärts- und Rückwärtslauf betreibbar ist und daß die Meßgröße (x) der Arbeitsstrom des Elektromotors ist.

5. Steuerschaltung nach Anspruch 3, **dadurch gekennzeichnet, daß** die Schließeinrichtung hydraulisch angetrieben ist und daß die Meßgröße (x) der Druck des hydraulischen Antriebs ist.

6. Steuerschaltung nach einem der Ansprüche 1 bis 5, **dadurch gekennzeichnet, daß** der Komparator (5) das Steuersignal (S) erzeugt, sobald die momentan erfaßte Meßgröße (x) größer ist als ein der momentanen Position (p) zugeordneter Referenzwert (x_{R}) der Meßgröße (x) einer oberen Toleranzkurve (b).

7. Steuerschaltung nach einem der Ansprüche 1 bis 5, **dadurch gekennzeichnet, daß** der Komparator (5) das Steuersignal (S) erzeugt, sobald die momentan erfaßte Meßgröße (x) kleiner ist als ein der momentanen Position (p) zugeordneter Referenzwert (x_{R}) der Meßgröße (x) einer unteren Toleranzkurve (c).

8. Steuerschaltung nach Anspruch 6, **dadurch gekennzeichnet, daß** die obere Toleranzkurve (b) mit der Referenzkurve (a) ein oberes Toleranzband definiert, welches sich auf der Achse der Meßgröße (x) in einem Bereich von 10%, vorzugsweise von 5% oberhalb der Referenzkurve (a) erstreckt.

9. Steuerschaltung nach Anspruch 7, **dadurch gekennzeichnet, daß** die untere Toleranzkurve (c) mit der Referenzkurve (a) ein unteres Toleranzband definiert, welches sich auf der Achse der Meßgröße (x) in einem Bereich von 10%, vorzugsweise von 5% unterhalb der Referenzkurve (a) erstreckt.

10. Steuerschaltung nach einem der voranstehenden Ansprüche, **dadurch gekennzeichnet, daß** das Steuersignal (S) die Abschaltung des Motors (1) bewirkt.

11. Steuerschaltung nach einem der Ansprüche 1 bis 10, **dadurch gekennzeichnet, daß** das Steuersignal (S) eine Verringerung der Antriebsleistung des Motors (1) bewirkt, wenn die momentan erfaßte Meßgröße (x) größer ist als der Referenzwert (x_{R}) der oberen Toleranzkurve (b), welcher der momentanen Position (p) zugeordnet ist.

12. Steuerschaltung nach einem der Ansprüche 1 bis 10, **dadurch gekennzeichnet, daß** das Steuersignal (S) bewirkt, daß der Motor (1) kurzzeitig in der Laufrichtung betrieben wird, welche zu der ursprünglichen Laufrichtung entgegengesetzt ist.

13. Verfahren zur Steuerung einer von einem Motor (1) angetriebenen Schließeinrichtung mit folgenden Schritten:
- Aufnehmen und Abspeichern von Referenzdaten, welche den Verlauf einer Meßgröße (x) in Abhängigkeit der Position (p) der Schließeinrichtung repräsentieren, wobei die Meßgröße (x) einer auf die Schließeinrichtung wirkenden Kraft entspricht und die Position (p) und die Meßgröße (x) bei störungsfreiem Normalbetrieb der Schließeinrichtung und bei unterschiedlichen Umgebungsparametern (v₁, v₂, v₃, ...) aufgenommen und unter Zuordnung zu den entsprechenden Werten der Umgebungsparameter (v₁, v₂, v₃, ...) als Referenzdatensätze oder Referenzkurven (6v₁, 6v₂, 6v₃, ...) abgespeichert werden;
- Erfassen der momentanen Werte der Position (p), der Meßgröße (x) und der Umgebungsparameter (v₁, v₂, v₃, ...) bei Betrieb der Schließeinrichtung;
- Vergleich der an der momentanen Position (p) erfaßten Meßgröße (x) mit dem dieser Position (p) und den Momentanwerten der Umgebungsparameter (v₁, v₂, v₃, ...) durch die Referenzdatensätze oder Referenzkurven (6v₁, 6v₂, 6v₃, ...) zugeordneten Referenzwert (x_{R}) der Meßgröße;
- Erzeugen eines Steuersignals (S), wenn bei dem Vergleich eine vorgegebene Abweichung zwischen der Meßgröße (x) und ihrem zugeordneten Referenzwert (x_{R}) überschritten wird.

14. Verfahren nach Anspruch 13, **dadurch gekennzeichnet, daß** die Referenzdaten durch mehrmaliges Erfassen der Meßgröße (x) in Abhängigkeit der Position (p) der Schließeinrichtung und anschließendes Mitteln der Daten aufgenommen werden.

15. Verfahren nach Anspruch 13 oder 14, **dadurch gekennzeichnet, daß** die Referenzdaten in Form von Ausgleichskurven (6) als Referenzkurven (a) abgespeichert werden, welche den Verlauf der Meßgröße (x) in Abhängigkeit der Position (p) bei störungsfreiem Betrieb der Schließeinrichtung und bei unterschiedlichen Umgebungsparametern repräsentieren.

16. Verfahren nach einem der Ansprüche 13 bis 15, **dadurch gekennzeichnet, daß** die Referenzdaten bei störungsfreiem Normalbetrieb der Schließeinrichtung zwischen einer ersten Endposition und einer zweiten Endposition aufgenommen werden.

17. Verfahren nach einem der Ansprüche 13 bis 16, **dadurch gekennzeichnet, daß** der Motor (1) im Vorwärts- und Rückwärtslauf betreibbar ist und daß die Referenzdaten jeweils getrennt für den Vorwärts- und Rückwärtslauf aufgenommen und abgespeichert werden.
